# EUROPÄISCHE PATENTSCHRIFT

(11) **EP 2 601 426 B1**
(45) Veröffentlichungstag und Bekanntmachung des Hinweises auf die Patenterteilung: **02.07.2014**
(21) Anmeldenummer: 11751838.1
(22) Anmeldetag: 01.08.2011
(51) Int. Cl.: F16F 15/14

(54) **DREHSCHWINGUNGSTILGER MIT ZWEIARMIGEM PENDEL**
TORSIONAL VIBRATION DAMPER COMPRISING A TWO-ARMED PENDULUM
AMORTISSEUR DE VIBRATIONS DE TORSION DOTÉ D'UN PENDULE À DEUX BRAS

(30) Priorität: 02.08.2010 DE 102010038782
(43) Veröffentlichungstag der Anmeldung: 12.06.2013
(73) Patentinhaber: B.E.C. Breitbach Engineering Consulting GmbH, 37075 Göttingen (DE)
(72) Erfinder: BREITBACH, Elmar, 37075 Göttingen (DE)
(74) Vertreter: REHBERG HÜPPE + PARTNER
(86) Internationale Anmeldenummer: PCT/EP2011/063237
(87) Internationale Veröffentlichungsnummer: WO 2012/016955

(56) Entgegenhaltungen:
- EP-A1- 0 739 814
- DE-A1-102004 047 854
- DE-A1-102006 023 568
- DE-U1-202007 010 294

## Beschreibung

### TECHNISCHES GEBIET DER ERFINDUNG

Die Erfindung betrifft einen Drehschwingungstilger für Schwingungen, die einer Drehbewegung um eine Drehachse überlagert sind, wobei der Drehschwingungstilger die Merkmale des Oberbegriffs des unabhängigen Patentanspruchs 1 aufweist.

Bei Schwingungen, die einer Drehbewegung um eine Drehachse überlagert sind, tritt es häufig auf, dass die Frequenzen der Schwingungen von der Drehzahl der Drehbewegung abhängig sind. Vielfach handelt es sich um Harmonische oder auch Subharmonische der Drehzahl. Ein Drehschwingungstilger kann die Schwingungen bei sich ändernder Drehzahl der Drehbewegung daher nur dann abmindern, wenn seine Tilgereigenfrequenz der Drehzahl linear folgt.

### STAND DER TECHNIK

Ein Drehschwingungstilger mit den Merkmalen des Oberbegriffs des unabhängigen Patentanspruchs 1 ist aus der DE 10 2006 023 568 A1 bekannt. Dieser Drehschwingungstilger umfasst wenigstens einen um eine Drehachse drehbaren Tilgerkörper und wenigstens eine auf eine Anregungsfrequenz abgestimmte Tilgermasse, die ein auf den Tilgerkörper wirkendes Moment erzeugt, wobei eine Ausgleichsmasse vorgesehen ist, die derart angeordnet ist, dass sie einen auf den Tilgerkörper wirkendes, dem durch die Tilgermasse erzeugten Moment entgegenwirkendes Moment erzeugt. Konkret handelt es sich bei dem Tilgerkörper um ein mit einer Drehbewegung um die Drehachse umlaufenden Teil, und die Tilgermasse und die Ausgleichsmasse sind Teil eines starren zweiarmigem Pendels, das um eine parallel zu der Drehachse verlaufende Pendelachse verschwenkbaren an dem Tilgerkörper gelagert ist. Die zu diesem Zweck vorzusehenden Schwenklager sind nicht unproblematisch, weil sie mit zunehmender Drehzahl um die Drehachse und entsprechend zunehmenden Fliehkräften erheblichen statischen Belastungen ausgesetzt sind, denen die Schwenkbewegung des Pendels mit vergleichsweise kleiner Amplitude überlagert ist. Unter diesen Randbedingungen kommt es auch bei hochwertigen Gleit-, Rollen- oder Kugellagern schnell zu Verschleißerscheinungen. Bei Rollen- und Kugellagern wird binnen kürzester Zeit das sogenannte "Pitting" beobachtet. Die Verschleißerscheinungen führen dazu, dass der bekannte Drehschwingungstilger seine Funktion einbüßen kann, wenn ihnen nicht mit erheblichem Aufwand entgegengewirkt wird. Der durch den bekannten Drehschwingungstilger bereitgestellte Vorteil, mittels der Ausgleichsmasse eine Eigenfrequenz des Pendels und damit eine Tilgereigenfrequenz einzustellen, die in einem nahezu beliebigen aber festen Verhältnis zu der Drehzahl um die Drehachse steht, kann daher bislang nur mit großem Aufwand genutzt werden.

### AUFGABE DER ERFINDUNG

Der Erfindung liegt die Aufgabe zugrunde, einen Drehschwingungstilger mit den Merkmalen des Oberbegriffs des unabhängigen Patentanspruchs 1 aufzuzeigen, bei dem mit Hilfe der Ausgleichsmasse des Pendels eine in Bezug auf die Drehzahl um die Drehachse beliebige aber feste Eigenfrequenz als Tilgereigenfrequenz des Drehschwingungstilgers einstellbar ist, der aber die Schwierigkeiten mit einer auch bei hohen Drehzahlen belastungsfesten Lagerung des Pendels beseitigt.

### LÖSUNG

Die Aufgabe der Erfindung wird durch einen Drehschwingungstilger mit den Merkmalen des unabhängigen Patentanspruchs 1 gelöst. Bevorzugte Ausführungsform des neuen Drehschwingungstilgers sind in den abhängigen Patentansprüchen 2 bis 15 beschrieben.

### BESCHREIBUNG DER ERFINDUNG

Der neue Drehschwingungstilger für Schwingungen, die einer Drehbewegung um eine Drehachse überlagert sind, weist ein mit der Drehbewegung um die Drehachse umlaufendes Teil und mindestens ein über einen Anbindungspunkt an dem umlaufenden Teil schwenkbar gelagertes starres zweiarmiges Pendel auf. Die beiden starr miteinander verbundenen Arme des Pendels erstrecken sich in einer Grundstellung des Pendels in einander entgegen gesetzten Richtungen von dem Anwendungspunkt radial zu der Drehachse, d. h. auch, dass sie zueinander unter einem Winkel von 180° ausgerichtet sind. Der radial nach außen weisende Arm des Pendels trägt eine Pendelmasse, und der radial nach innen weisende Arm trägt eine Ausgleichsmasse. Das Pendel ist in seinem Anbindungspunkt, über den es an dem umlaufenden Teil schwenkbar gelagert ist, an einem Ende einer verformbaren Festkörperschnittstelle befestigt, die mit ihrem anderen Ende an dem umlaufenden Teil befestigt ist. Diese Festkörperschnittstelle nimmt die zwischen dem Anbindungspunkt und dem umlaufenden Teil mit zunehmender Drehzahl um die Drehachse anwachsenden Fliehkräfte auf, ohne dass in dem Kraftübertragungsweg irgendwelche aufeinander abgleitenden oder aufeinander abrollenden Elemente vorgesehen sind. Die Verschwenkbarkeit des Pendels gegenüber dem umlaufenden Teil beruht ausschließlich auf der Verformbarkeit der Festkörperschnittstelle.

Die Festkörperschnittselle kann grundsätzlich so angeordnet sein, dass ihr an dem umlaufenden Teil befestigtes anderes Ende gegenüber ihrem an dem Anbindungspunkt des Pendels befestigten einen Ende bezogen auf die Drehachse radial innen oder radial außen liegt. Bei der konkreten Wahl der Lage sind die auftretenden erheblichen Fliehkräfte und die Belastbarkeiten des Festkörperschnittstelle auf Druck und Zug zu berücksichtigen.

Bezogen auf die Masseschwerpunkte der Pendelmasse und der Ausgangsmasse des Pendels kann das andere Ende der Festkörperschnittstelle, das an dem umlaufenden Teil befestigt ist, zwischen der Pendelmasse und der Ausgleichsmasse oder jenseits der Pendelmasse oder der Ausgleichsmasse liegen. Es ist ausreichend, wenn die Festkörperschnittstelle eine solche Schwenkbewegung des Pendels ermöglicht, die die beiden Arme des Pendels aus ihrer Ausrichtung radial zu der Drehachse herausbringt, um einen Nutzen aus der Ausgleichsmasse ziehen zu können. Vorzugsweise werden die beiden Arme bei der Schwenkbewegung des Pendels gegenüber dem an dem umlaufenden Teil befestigten anderen Ende der Festkörperschnittstelle in unterschiedlichen Richtungen um die Drehachse auslenkt. Mit der Anordnung der Festkörperschnittstelle zwischen dem Anbindungspunkt des Pendels und dem umlaufenden Teil kann so im großen Umfang auf die effektive Länge des Pendels Einfluss genommen werden, die seine Eigenfrequenz und damit die Tilgereigenfrequenz des neuen Drehschwingungstilgers bestimmt.

Es wurde bereits angedeutet, dass im Betrieb des neuen Drehschwingungstilgers jedes Pendel ausschließlich über seine verformbare Festkörperschnittstelle an dem mit der Drehbewegung um die Drehachse umlaufenden Teil abgestützt ist. Dies schließt aber nicht aus, dass es an dem Teil z. B. parallel zu den auftretenden Fliehkräften verlaufende Führungen für das Pendel gibt, weil diese durch die auftretenden Fliehkräfte nicht beansprucht werden.

Es ist auch nicht ausgeschlossen, sondern vielmehr bevorzugt, wenn Schwenkbewegungen jedes Pendels gegenüber dem umlaufenden Teil gedämpft sind, um die Amplitude des Pendels zu begrenzen und um auch eine gewisse Ausweitung des Drehzahlbereichs, in dem der neue Drehschwingungstilger wirksam ist, zu erreichen. Auf diese Weise können beispielsweise kleine Abstimmungsfehler oder durch die Festkörperschnittstelle hervorgerufene Nichtlinearitäten hinsichtlich der Drehzahl kompensiert werden.

Die Dämpfung jedes Pendels kann insbesondere dadurch erreicht werden, dass es seine Pendelbewegung gegenüber den umlaufenden Teil in einer viskosen Flüssigkeit vollführt. Es ist aber auch möglich, die Festkörperschnittstellen der Pendel viskos zu dämpfen, indem beispielsweise viskose Polster integriert oder sonst wie angekoppelt werden. Eine Dämpfung der Festkörperschnittstellen kann auch durch Auswahl von Materialen für die Festkörperschnittstellen mit hoher innerer Dämpfung, wie beispielsweise Elastomerwerkstoffe, erreicht werden.

Es ist zwar grundsätzlich möglich, die Festkörperschnittstelle so auszubilden, dass sie eine im Wesentlichen ortsfeste Pendelachse für das Pendel gegenüber dem umlaufenden Teil bereitstellt. In der Regel ist es bei dem neuen Drehschwingungstilger aber so, dass jedes Pendel um eine Pendelachse gegenüber dem umlaufenden Teil verschwenkbar ist, die eine Lage aufweist, welche von der Auslenkung des Pendels und/oder von der Drehzahl der Drehbewegung abhängig ist. Letztere Abhängigkeit ergibt sich vielfach dadurch, dass die effektive Verteilung der Steifigkeiten zwischen den Enden der Festkörperschnittstelle durch die Überlagerung mit den Fliehkräften verändert wird.

Die verformbare Festkörperschnittstelle kann von einem elastisch verformbaren Festkörper ausgebildet werden. D.h., die Festkörperschnittstelle ist dann sehr einfach aufgebaut, was die kostengünstige Herstellung des neuen Drehschwingungstilgers erleichtert. Häufig sind bei der Festkörperschnittstelle auch mehrere elastisch verformbare Festköper parallel zueinander angeordnet. Konkret kann es sich dabei um Blattfedern handeln. Diese Blattfedern verlaufen vorzugsweise in der Grundstellung des jeweiligen Pendels in radialer Richtung zu der Drehachse.

Die Blattfedern können eine Umbiegung mit radial zu der Drehachse ausgerichteten Krümmungsradius aufweisen, um zumindest bereichsweise aufgrund der im Betrieb des neuen Drehschwingungstilgers auftretende Fliehkräfte unter eine Druckbelastung gesetzt zu werden, die ihre Quersteifigkeit reduziert.

Bei dem neuen Drehschwingungstilger ist vorzugsweise eine rotationssymmetrische Anordnung mehrerer Pendel vorgesehen, wobei die Rotationssymmetrie insbesondere mindestens dreifach ist.

Die Anordnung kann auch unterschiedliche Pendel mit unterschiedlichen Eigenfrequenzen aufweisen, wobei die unterschiedlichen Eigenfrequenzen insbesondere verschiedene Harmonische zu der Drehzahl der Drehbewegung sind. Typischerweise umfasst die Gesamtanordnung jeweils drei auf die gleiche Eigenfrequenz abgestimmte Pendel für jede der Harmonischen, wobei der Begriff Harmonische hier auch Subharmonische der Drehzahl der Drehbewegung einschließt.

Die Pendelebenen der einzelnen Pendel des neuen Drehschwingungstilgers können nicht nur normal zu der Drehachse verlaufen, sondern auch in deren Richtung oder sogar schräg zu der Drehachse. Die der Drehbewegung überlagerten Schwingungen, die der neue Drehschwingungstilger abmindert, sind nicht auf solche in Umfangsrichtung um die Drehachse beschränkt, sondern sie können auch in Richtung der Drehachse verlaufen oder unter irgendeinem Winkel dazu.

Grundsätzlich ist es auch möglich, dass sich die Pendelebene mindestens eines Pendels um eine Radiale zu der Drehachse frei ausrichten kann. Dies wird beispielsweise dadurch erreicht, dass die Festkörperschnittstelle auf einem Biegestab von kreisrundem Querschnitt aufbaut.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: skizziert einen neuen Drehschwingungstilger mit zwei Pendeln, von denen das eine in seiner Grundstellung und das andere in einer verschwenkten Stellung dargestellt ist.
- **Fig. 2**: zeigt eine Draufsicht auf eines der Pendel gemäß Fig. 1 mit Blickrichtung senkrecht zu der Drehachse des Drehschwingungstilgers gemäß Fig. 1.
- **Fig. 3**: ist eine Ansicht einer anderen Ausführungsform eines Pendels eines erfindungsgemäßen Drehschwingungstilgers in einer Fig. 3 entsprechenden Blickrichtung.
- **Fig. 4**: ist eine Ansicht des Pendels gemäß Fig. 3 in einer Fig. 2 entsprechenden Blickrichtung.
- **Fig. 5**: ist eine von der Blickrichtung her den Figuren 2 und 4 entsprechende Ansicht einer weiteren Ausführungsform eines Pendels eines erfindungsgemäßen Drehschwingungstilgers; und
- **Fig. 6**: ist eine den Figuren 2, 4 und 5 entsprechende Ansicht noch einer weiteren Ausführungsform eines Pendels eines erfindungsgemäßen Drehschwingungstilgers.

### FIGURENBESCHREIBUNG

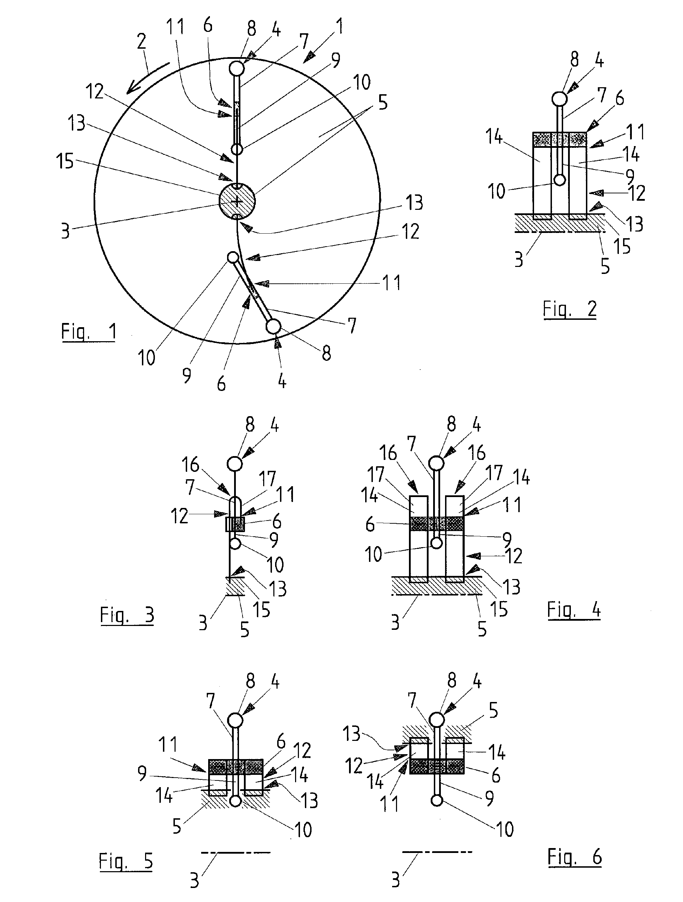

Der in **Fig. 1** dargestellte Drehschwingungstilger 1 ist zum Abmindern von Schwingungen vorgesehen, die einer durch einen Pfeil angedeuteten Drehbewegung 2 um eine Drehachse 3 überlagert sind. Konkret ist der Drehschwingungstilger 1 hier für Drehschwingungen um die Drehachse 3 vorgesehen, weil Pendel 4, auf denen die Wirkung des Drehschwingungstilger 1 basiert, hier nur in einer normal zu der Drehachse verlaufenden, mit der Zeichenebene zusammenfallenden Ebene gegenüber einem Teil 5 des Drehschwingungstilgers 1 beweglich sind. Durch andere Ausrichtung der Bewegungsebene der Pendel 4 könnten beispielsweise auch Schwingungen in Richtung der Drehachse 3 mit dem Drehschwingungstilger 1 abgemindert werden. Die Pendel 4 sind starre zweiarmige Pendel, deren beiden Arme sich jeweils von einem Anbindungspunkt 6 erstrecken. In einer Grundstellung der Pendel 4, die bei dem in Figur 1 oberen Pendel wiedergegeben ist, erstrecken sich beide Arme in entgegen gesetzten Richtungen von dem Anbindungspunkt 6 radial zu der Drehachse 3. Dabei ist an dem radial nach außen weisenden Arm 7 eine Pendelmasse 8 und an dem radial nach innen weisenden Arm 9 eine Ausgleichsmasse 10 angebracht. Praktisch gehört zu der Pendelmasse 8 auch die Masse des Arms 7 und zu der Ausgleichsmasse 10 auch die Masse des Arms 9. Die Ausgleichsmasse 10, die bei Schwenkbewegungen des Pendels 4 in entgegen gesetzter Richtung zur Pendelmasse 8 ausgelenkt wird (siehe unten in Fig. 1), erlaubt es, die Eigenfrequenz des Pendels 4 im Fliehkraftfeld der Drehbewegung um die Drehachse 3 auf ein beliebiges aber festes Verhältnis zu der Drehzahl der Drehbewegung 2 und die Drehachse 3 einzustellen. Dabei sind insbesondere auch die Drehzahlen selbst und sogar Subharmonische der Drehzahl zu erreichen.

Bei dem Drehschwingungstilger 1 sind die Pendel 4 über ihrem jeweiligen Anbindungspunkt 6 an dem umlaufenden Teil 5 gelagert, indem sie in dem Anbindungspunkt 6 an einem Ende 11 einer Festkörperschnittstelle 12 befestigt sind, die an ihrem anderen Ende 13 an dem umlaufenden Teil 5 befestigt ist. Konkret ist die Festkörperschnittstelle hier jeweils durch zwei parallel zueinander verlaufende Blattfedern 14 ausgebildet, wie aus **Fig. 2** näher hervorgeht. Die Blattfedern 14 sind starr in einer Narbe 15 des Teils 5 verankert und erstrecken sich von dort in Richtung von der Drehachse weg bis zu dem Anbindungspunkt 6, in dem sie starr mit den Pendel 4 zwischen dessen Armen 7 und 9 verbunden sind. Die derart ausgebildete Festkörperschnittstelle 12 stellt für das Pendel 4 zwar keine ortsfeste Pendelachse bereit. Vielmehr wandert die Pendelachse mit der Aussenkung des Pendels 4 und auch unter Einwirkung der Fliehkräfte aufgrund der Drehbewegung 2 um die Drehachse 3. Dies ist aber für die grundsätzliche Funktion des Drehschwingungstilgers 1 unerheblich. Etwaige Abweichungen von den gewünschten linearen Abhängigkeiten der Eigenfrequenzen der Pendel 4 von der Drehzahl um die Drehachse 3 können leicht durch eine Dämpfung der Pendel 4 ausgeglichen werden, die sowieso zur Vermeidung überhöhter Amplituden der Auslenkung der Pendel 4 sinnvoll ist.

Die **Figuren 3 und 4** skizzieren eine Ausführungsform eines Pendels 4, bei dem die Blattfedern 14 an ihrem von der Drehachse 3 entferntesten Punkt eine Umbiegung 16 aufweisen, deren Krümmungsradius radial zu der Drehachse 3 verläuft. Hierdurch resultiert ein Bereich 17 der Blattfedern 14 vor dem jeweiligen Anbindungspunkt 6 mit gegenläufiger Richtung zu dem Rest der jeweiligen Blattfeder 14. Dieser Bereich 17 wird entsprechend durch Fliehkräfte von der Drehachse 3 weg nicht auf Zug sondern auf Druck beansprucht, was zu einer Reduzierung der Federsteifigkeit der Blattfeder 14 führt. Dieser Effekt kann zur Abstimmung der Eigenfrequenz des Pendels 4 gezielt genutzt werden. Er ist natürlich nur dann nutzbar, wenn der Anbindungspunkt 6 des Pendels 4 an dem sich von der Drehachse 3 wegerstreckenden Bereich 17 der jeweiligen Blattfeder 14 nur geführt ist, hier aber keine starre Verbindung besteht, sondern eine solche starre Verbindung nur mit dem freien Ende des umgebogenen Bereichs 17 der Blattfeder 14 gegeben ist.

**Fig. 5** skizziert ein Pendel 4, bei dem die Schnittstelle 12 zwischen dem umlaufenden Teil 5 und dem Anbindungspunkt 6 eine kürzere Erstreckung als der Arm 9 zwischen dem Anbindungspunkt 6 und der Ausgangsmasse 10 aufweist, während bei den bisherigen Ausführungsformen des Pendels 4 der Abstand zwischen den Enden 11 und 13 der Festkörperschnittstelle 12 größer als die Länge des Arms 9 war. Bei zwischen ihren Enden 11 und 13 sehr kurzen Festkörperschnittstellen 12 kann sich ein erhöhter Einfluss ihrer Steifigkeit auf die Eigenfrequenz des Pendels 4 ergeben, was aber bei Ausbildung der Festkörperschnittstelle 12 aus weichelastischem Material kein ausgeprägter Effekt sein muss.

**Fig. 6** skizziert ein Pendel, bei dem sich die Festkörperschnittstelle 12 zwischen ihren Enden 11 und 13 nicht radial von der Drehachse 3, welche auch hier unten in der Figur liegt, nicht radial nach außen sondern radial nach innen erstreckt. Auch hierdurch kann mit den auftretenden Fliehkräften die resultierende Steifigkeit der Festkörperschnittstelle 12 beeinflusst werden.

Bei allen hier vorgestellten Ausführungsformen eines Pendels 4 ist das Pendel 4 nicht über aufeinander abgleitende oder aufeinander abrollende Teile in Richtung der Fliehkraft um die Drehachse 3 an dem umlaufenden Teil 5 abgestützt, sondern ausschließlich über die jeweilige Festkörperschnittstelle 12. Dem steht nicht entgegen, dass das jeweilige Pendel 4 parallel zu seiner Pendelebene an dem umlaufenden Teil 5 geführt ist oder seine Pendelbewegung gegenüber dem umlaufenden Teil 5 beispielsweise durch ein viskoses Medium gedämpft ist.

### BEZUGSZEICHENLISTE

- 1: Drehschwingungstilger
- 2: Drehbewegung
- 3: Drehachse
- 4: Pendel
- 5: umlaufendes Teil
- 6: Anbindungspunkt
- 7: Arm
- 8: Pendelmasse
- 9: Arm
- 10: Ausgleichsmasse
- 11: Ende
- 12: Festkörperschnittstelle
- 13: Ende
- 14: Blattfeder
- 15: Narbe
- 16: Umbiegung
- 17: umgebogener Bereich

## Patentansprüche

1. Drehschwingungstilger (1) für Schwingungen, die einer Drehbewegung (2) um eine Drehachse (3) überlagert sind, mit einem mit der Drehbewegung (2) um die Drehachse (3) umlaufenden Teil (5) und mit mindestens einem über einen Anbindungspunkt (6) an dem umlaufenden Teil (5) schwenkbar gelagerten starren zweiarmigen Pendel (4), wobei sich die beiden starr miteinander verbundenen Arme (7, 9) des Pendels in einer Grundstellung des Pendels (4) in einander entgegen gesetzten Richtungen von dem Anbindungspunkt (6) radial zu der Drehachse (3) erstrecken, wobei der radial nach außen weisende Arm (7) eine Pendelmasse (8) und der radial nach innen weisende Arm (9) eine Ausgleichsmasse (10) trägt, **dadurch gekennzeichnet, dass** jedes Pendel (4) in seinem Anbindungspunkt (6) an einem Ende (11) einer verformbaren Festkörperschnittstelle (12) befestigt ist, die mit ihrem anderen Ende (13) an dem umlaufenden Teil (5) befestigt ist.

2. Drehschwingungstilger (1) nach Anspruch 1, **dadurch gekennzeichnet, dass** das andere Ende (13) der Festkörperschnittstelle (12)
- gegenüber ihrem einen Ende (11) bezogen auf die Drehachse (3)
- radial innen oder
- radial außen
- und bezogen auf deren Massenschwerpunkte
- zwischen der Pendelmasse (8) und der Ausgleichsmasse (10) oder
- jenseits der Pendelmasse (8) oder der Ausgleichsmasse (10) liegt.

3. Drehschwingungstilger (1) nach Anspruch 1 oder 2, **dadurch gekennzeichnet, dass** jedes Pendel (4) im Betrieb des Drehschwingungstilgers (1) ausschließlich über seine verformbare Festkörperschnittstelle (12) an dem mit der Drehbewegung (2) um die Drehachse (3) umlaufenden Teil (5) abgestützt ist.

4. Drehschwingungstilger (1) nach mindestens einem der vorhergehenden Ansprüche, **dadurch gekennzeichnet, dass** Schwenkbewegungen jedes Pendels (4) gegenüber dem umlaufenden Teil (5) gedämpft sind.

5. Drehschwingungstilger (1) nach Anspruch 4, **dadurch gekennzeichnet, dass** jedes Pendel (4) seine Pendelbewegung in einer viskosen Flüssigkeit vollführt.

6. Drehschwingungstilger (1) nach mindestens einem der vorhergehenden Ansprüche 4 und 5, **dadurch gekennzeichnet, dass** die Festkörperschnittstelle (12) jedes Pendels (4) viskos gedämpft ist.

7. Drehschwingungstilger (1) nach mindestens einem der vorhergehenden Ansprüche, **dadurch gekennzeichnet, dass** jedes Pendel (4) um eine Pendelachse gegenüber dem umlaufenden Teil (5) verschwenkbar ist, die eine von einer Auslenkung des Pendels (4) abhängige Lage aufweist.

8. Drehschwingungstilger (1) nach mindestens einem der vorhergehenden Ansprüche, **dadurch gekennzeichnet, dass** jedes Pendel (4) um eine Pendelachse gegenüber dem umlaufenden Teil (5) verschwenkbar ist, die eine von der Drehzahl der Drehbewegung (2) abhängige Lage aufweist.

9. Drehschwingungstilger (1) nach mindestens einem der vorhergehenden Ansprüche, **dadurch gekennzeichnet, dass** die verformbare Festkörperschnittstelle (12) von einem oder mehreren parallel zueinander angeordneten elastisch verformbaren Festkörpern ausgebildet wird.

10. Drehschwingungstilger (1) nach Anspruch 9, **dadurch gekennzeichnet, dass** der oder die elastisch verformbaren Festkörper Blattfedern (14) sind.

11. Drehschwingungstilger (1) nach Anspruch 10, **dadurch gekennzeichnet, dass** die Blattfedern (14) eine Umbiegung (16) mit radial zu der Drehachse (3) ausgerichtetem Krümmungsradius aufweisen.

12. Drehschwingungstilger (1) nach mindestens einem der vorhergehenden Ansprüche, **dadurch gekennzeichnet, dass** er eine rotationssymmetrische Anordnung mehrerer Pendel (4), insbesondere mit einer mindestens dreifachen Rotationssymmetrie, aufweist.

13. Drehschwingungstilger (1) nach Anspruch 12, **dadurch gekennzeichnet, dass** die Anordnung unterschiedliche Pendel (4) mit unterschiedlichen Eigenfrequenzen aufweist, wobei die unterschiedlichen Eigenfrequenzen insbesondere verschiedene Harmonische zu der Drehzahl der Drehbewegung (2) sind.

14. Drehschwingungstilger (1) nach mindestens einem der vorhergehenden Ansprüche, **dadurch gekennzeichnet, dass** jedes Pendel (4) in einer Pendelebene gegenüber dem umlaufenden Teil (5) verschwenkbar ist,
- die normal zu der Drehachse (3) verläuft oder
- in der die Drehachse (3) verläuft oder
- oder in der eine Radiale zu der Drehachse (3) verläuft.

15. Drehschwingungstilger (1) nach Anspruch 14, **dadurch gekennzeichnet, dass** sich die Pendelebene mindestens eines Pendels (1) um die Radiale zu der Drehachse (3) frei ausrichten kann.

## Claims

1. Torsional vibration damper (1) for vibrations which are superimposed to a rotation movement (2) about a rotation axis (3), comprising a part (5) rotating about the rotation axis (3) according to the rotation movement (2) and at least one rigid two-armed pendulum (4) swivel-mounted to the rotating part (5) via a connection point (6), wherein the two rigidly connected arms (7, 9) of the pendulum, in a basic position of the pendulum (4), with regard to the rotation axis (3), radially extend from the connection point (6) in opposite directions, wherein the arm (7) radially pointing outwards carries a pendulum mass (8) and the arm (9) radially pointing outwards carries a compensation mass (10), **characterised in that** each pendulum (4), in its connection point (6), is connected to one end of a deformable solid body interface (12) which, at its other end (13), is connected to the rotating part (5).

2. Torsional vibration damper (1) of claim 1, **characterised in that** the other end (13) of the solid body interface (12) is positioned
- relative to its one end (11) with regard to the rotation axis (3)
- radially inwards or
- radially outwards
- and with regard to their centres of mass
- between the pendulum mass (8) and the compensation mass (10) or
- on the other side of the pendulum mass (8) or the compensation mass (10).

3. Torsional vibration damper (1) according to claim 1 or 2, **characterised in that** each pendulum (4), in operation of the torsional vibration damper (1), is supported at the part (5) rotating according to the rotation movement (2) about the rotation axis (3) via its deformable solid body interface (12), only.

4. Torsional vibration damper (1) according to at least one of the preceding claims, **characterised in that** swivel movements of each pendulum (4) relative to the rotating part (5) are dampened.

5. Torsional vibration damper (1) according claim 4, **characterised in that** each pendulum (4) performs its pendulum movements in a viscous liquid.

6. Torsional vibration damper (1) according to at least one of the preceding claims 4 and 5, **characterised in that** the solid body interface (12) of each pendulum (4) is viscously dampened.

7. Torsional vibration damper (1) according to at least one of the preceding claims, **characterised in that** each pendulum (4) is swivelling about a pendulum axis relative to the rotating part (5), the pendulum axis having a position depending on the deflection of the pendulum (4).

8. Torsional vibration damper (1) according to at least one of the preceding claims, **characterised in that** each pendulum (4) is swivelling about a pendulum axis relative to the rotating part (5), the pendulum axis having a position depending on the number of rotation of the rotation movement (2).

9. Torsional vibration damper (1) according to at least one of the preceding claims, **characterised in that** the deformable solid body interface (12) is formed by at least one or more elastically deformable solid bodies arranged in parallel.

10. Torsional vibration damper (1) according to claim 9, **characterised in that** the elastically deformable solid bodies are leaf springs (14).

11. Torsional vibration damper (1) according to claim 10, **characterised in that** the leaf springs (14) have a bend (16) with a radius of curvature oriented radially with regard to the rotation axis (3).

12. Torsional vibration damper (1) according to at least one of the preceding claims, **characterised in that** it comprises a rotational-symmetric arrangement of a plurality of pendulums (4), particularly with an at least three-fold rotational symmetry.

13. Torsional vibration damper (1) according to claim 12, **characterised in that** the arrangement comprises different pendulums (4) of different eigenfrequencies, wherein, particularly, the different eigenfrequencies are different harmonics of the number of rotation of the rotation movement (2).

14. Torsional vibration damper (1) according to at least one of the preceding claims, **characterised in that** each pendulum (4) is swivelling relative to the rotating part (5) in a pendulum plane,
- which runs normal to the rotation axis (3) or
- in which the rotation axis (3) runs, or
- in which a radial to the rotation axis (3) runs.

15. Torsional vibration damper (1) according to claim 14, **characterised in that** the pendulum plane of at least one pendulum (1) is free to orientate itself about the radial to the rotation axis (3).

## Revendications

1. Amortisseur de vibrations torsionnelles (1) pour des vibrations qui sont superposées à un mouvement de rotation (2) autour d'un axe de rotation (3), comportant une partie rotative (5) tournant avec le mouvement de rotation (2) autour de l'axe de rotation (3) et comportant au moins un pendule (4) à deux bras fixes, monté de manière oscillante sur la partie rotative (5) par l'intermédiaire d'un point de fixation (6), les deux bras (7, 9) du pendule, reliés l'un à l'autre de manière fixe, s'étendant, dans une position de base du pendule (4), dans des directions opposées l'une à l'autre depuis le point de fixation (6) radialement par rapport à l'axe de rotation (3), le bras (7), dirigé radialement vers l'extérieur, portant une masse pendulaire (8), et le bras (9), dirigé radialement vers l'intérieur, portant une masselotte (10), **caractérisé en ce que** chaque pendule (4) est fixé dans son point de fixation (6) à une extrémité (11) d'une interface solide (12) déformable, dont l'autre extrémité (13) est fixée à la partie rotative (5).

2. Amortisseur de vibrations torsionnelles (1) selon la revendication 1, **caractérisé en ce que** l'autre extrémité (13) de l'interface solide (12) se situe
- à l'opposé de son extrémité (11) par rapport à l'axe de rotation (3)
- radialement vers l'intérieur ou
- radialement vers l'extérieur,
- et par rapport à son centre d'inertie
- entre la masse pendulaire (8) et la masselotte (10) ou
- de l'autre côté de la masse pendulaire (8) ou de la masselotte (10).

3. Amortisseur de vibrations torsionnelles (1) selon la revendication 1 ou 2, **caractérisé en ce que**, en cours de service de l'amortisseur de vibrations torsionnelles (1), chaque pendule (4) est en appui exclusivement par l'intermédiaire de son interface solide (12) déformable sur la partie rotative (5) tournant avec le mouvement de rotation (2) autour de l'axe de rotation (3).

4. Amortisseur de vibrations torsionnelles (1) selon au moins l'une des revendications précédentes, **caractérisé en ce que** les mouvements oscillants de chaque pendule (4) par rapport à la partie rotative (5) sont amortis.

5. Amortisseur de vibrations torsionnelles (1) selon la revendication 4, **caractérisé en ce que** chaque pendule (4) exécute son mouvement de balancier dans un liquide visqueux.

6. Amortisseur de vibrations torsionnelles (1) selon au moins l'une des revendications précédentes 4 et 5, **caractérisé en ce que** l'interface solide (12) de chaque pendule (4) est amortie de manière visqueuse.

7. Amortisseur de vibrations torsionnelles (1) selon au moins l'une des revendications précédentes, **caractérisé en ce que** chaque pendule (4) est apte à osciller par rapport à la partie rotative (5) autour d'un axe du pendule, qui possède une position qui dépend d'une déviation du pendule (4).

8. Amortisseur de vibrations torsionnelles (1) selon au moins l'une des revendications précédentes, **caractérisé en ce que** chaque pendule (4) est apte à osciller par rapport à la partie rotative (5) autour d'un axe du pendule, qui possède une position qui dépend de la vitesse de rotation du mouvement de rotation (2).

9. Amortisseur de vibrations torsionnelles (1) selon au moins l'une des revendications précédentes, **caractérisé en ce que** l'interface solide (12) déformable est constituée par un ou plusieurs solides élastiquement déformables, disposés parallèlement entre eux.

10. Amortisseur de vibrations torsionnelles (1) selon la revendication 9, **caractérisé en ce que** le ou les solides élastiquement déformables sont des ressorts à lames (14).

11. Amortisseur de vibrations torsionnelles (1) selon la revendication 10, **caractérisé en ce que** les ressorts à lames (14) comportent une courbure (16) avec un rayon de courbure orienté radialement à l'axe de rotation (3).

12. Amortisseur de vibrations torsionnelles (1) selon au moins l'une des revendications précédentes, **caractérisé en ce qu'**il comporte un agencement à symétrie de révolution de plusieurs pendules (4), en particulier avec une symétrie de révolution au moins triple.

13. Amortisseur de vibrations torsionnelles (1) selon la revendication 12, **caractérisé en ce que** l'agencement comporte des pendules (4) différents avec des fréquences propres différentes, lesdites fréquences propres différentes étant en particulier différentes harmoniques par rapport à la vitesse de rotation du mouvement de rotation (2).

14. Amortisseur de vibrations torsionnelles (1) selon au moins l'une des revendications précédentes, **caractérisé en ce que** chaque pendule (4) est apte à osciller par rapport à la partie rotative (5) dans un plan du pendule
- qui s'étend perpendiculairement à l'axe de rotation (3) ou
- dans lequel s'étend l'axe de rotation (3) ou
- dans lequel s'étend une radiale à l'axe de rotation (3).

15. Amortisseur de vibrations torsionnelles (1) selon la revendication 14, **caractérisé en ce que** le plan d'au moins un pendule (1) peut s'aligner librement autour de la radiale à l'axe de rotation (3).
